Europäisches Patentamt

European Patent Office

Office européen des brevets

(11) Publication number: **0 225 932**
**A1**

## (12) EUROPEAN PATENT APPLICATION

(21) Application number: 85115926.9

(22) Date of filing: 13.12.85

(51) Int. Cl.⁴: **C04B 28/02** , C04B 20/00 ,
///(C04B28/02,14:20,14:46,16:06-
,18:14,18:24)

(43) Date of publication of application:
**24.06.87 Bulletin 87/26**

(84) Designated Contracting States:
**BE CH DE FR GB LI NL**

(71) Applicant: **KURARAY CO., LTD.**
**1621 Sakazu**
**Kurashiki-City Okayama Prefecture(JP)**

(72) Inventor: **Genba, Tsuneo**
**256-13, Kanemoto Okayama-City**
**Okayama-Prefecture(JP)**
Inventor: **Mizobe, Akio**
**2-6-34, Fukushima Okayama-City**
**Okayama-Prefecture(JP)**
Inventor: **Okazaki, Masaki**
**3-996-65, Hirai Okayama-City**
**Okayama-Prefecture(JP)**
Inventor: **Itadani, Sotaro**
**883-1, Tanoue Kurashiki-City**
**Okayama-Prefecture(JP)**

(74) Representative: **Vossius & Partner**
**Siebertstrasse 4 P.O. Box 86 07 67**
**D-8000 München 86(DE)**

(54) **Asbestos-free, hydraulic inorganic material-based sheet products and process for their production.**

(57) An aqueous dispersion containing an inorganic sheet-forming component preferably silica fume pulp, reinforcing fiber, fibrous inorganic material, flocculant and hydraulic inorganic material in specified proportions is excellent in dispersibility of the reinforcing fiber, retention of the hydraulic inorganic material and other aspects in spite of the absence of asbestos therein. Sheets formed from the aqueous dispersion in the manner of papermaking are resistant to layer separation and to cracking in the step of shaping such as corrugation. Products derived from the sheets are excellent in physical properties, such as strength.

EP 0 225 932 A1

## ASBESTOS-FREE, HYDRAULIC INORGANIC MATERIAL-BASED SHEET PRODUCTS AND PROCESS FOR THEIR PRODUCTION

### BACKGROUND OF THE INVENTION

1. Field of the Invention

This invention relates to a hydraulically setting inorganic material-based product formed in the manner of papermaking without the use of asbestos and essentially having good mechanical properties and to a process for producing such product.

2. Description of the Prior Art

Hydraulically setting inorganic material-based products formed in the manner of papermaking, typically asbestos cement sheets, are composite products mainly composed of a fibrous material, such as asbestos, and a hydraulically setting material, such as cement.

The most popular process for their production is the wet process which comprises dispersing a fibrous component such as asbestos and a hydraulic bonding component such as cement, together with other additives as necessary, in water to give a 5-30 weight percent aqueous dispersion (slurry for sheet formation), forming a sheet from said dispersion on a cylinder mold or Fourdrinier wire, and then dehydrating, shaping, hardening and drying the same.

The above process requires only simple equipment and gives high-strength, inexpensive, incombustible products in high productivity and such products are used in large quantities as materials of construction in a wide variety of fields.

It is said that, in such hydraulic inorganic material-based products formed in the manner of paper-making, asbestos plays the following roles:

(1) Effects of rendering the sheet formation step highly productive:

(a) Providing uniform dispersibility of a fibrous material used combinedly therewith;

(b) Increasing the retention of particulate materials, mainly the hydraulic material, and providing the sheet with an adequate extent of drainage;

(c) Preventing such phenomena as layer separation and formation of wrinkles and/or water streaks from occurring on the making roll or molding roll;

(d) Providing the sheet with surface smoothness as well as good shapeability in press molding; and

(e) Increasing the green sheet strength (improving the ease in handling); and

(2) Effects of securing product physical properties (reinforcement of the hydraulic material);

(a) Improving mechanical properties such as bending strength, tensile strength and impact strength;

(b) Providing the sheet with dimensional stability; and

(c) Improving the durability. Furthermore, it hardly impairs characteristic properties originally possessed by the hydraulic material, such as incombustibility, Moreover, it is a very cheap material.

As mentioned above, the roles of asbestos in such inorganic products formed in the manner of papermaking are very important. For this reason, it is even said that, without the occurrence of asbestos, there would never be such products as mentioned above which are inexpensive and have excellent physical properties.

Such excellent characteristics of asbestos are due, among others, to the facts that it is a fibrillose material, that is rich in affinity for or compatibility with hydraulic materials, that it has high strength and high Young's modulus, that it is an inorganic fiber and that it has high retentionability of water.

On the other hand, asbestos dust is formed in air in the production, processing and use of asbestos-containing products. Recent studies have shown that when inhaled by humans, minute asbestos dust particles may cause lung cancer, among others, and therefore the use thereof is nowadays becoming restricted bit by bit under laws and regulations. There are even signs of the use thereof being banned.

Under these circumstances, it is earnestly desired that asbestos-free hydraulic inorganic material-based products which have the same high performance characteristics are provided, as substitutes for those hydraulic inorganic material-based products formed in the manner of papermaking which contain asbestos in large amounts, in the same high productivity as in the case of such asbestos-containing products.

Attempts have hitherto been made to provide such products by the wet papermaking-like process using some other materials than asbestos. However, the products are not fully satisfactory as yet and are therefore suited, if suited, only for very restricted uses.

This is because no substitutes can meet those requirements put forth with respect to retention of hydraulic materials, prevention of layer separation, provision of shapeability or the like, excellent reinforcing ability and so forth, as mentioned above, which can be met with asbestos.

Japanese Patent Publication Kokai No. 55-121947 and No. 55-121948 each discloses an invention directed to substitution of a combination of pulp, flocculant and glass fiber for asbestos, which combination provides improved dispersibility of glass fiber and improved retention of hydraulic materials, among others. However, the dispersibility and retentionability are not yet fully satisfactory. As for the retentionability, in particular, the recovery is at most about 70%, as described in the examples in the patent specifications cited above, hence is unsatisfactory from the commercial production viewpoint, although the effectiveness of the use of flocculants can be seen. Furthermore, the problem of layer separation still remains there to be solved.

Japanese Patent Publication No. 57-60315 discloses a technique according to which the retention of hydraulic materials is increased by means of pulp and a relatively fine fiber (e.g. rock wool) and the product properties are improved through the use of an alkali-resistant glass fiber. However, this technique is insufficient with respect to the retention of hydraulic materials and still has the great problems of layer separation and shapeability. Furthermore, alkali-resistant glass fibers have poor dispersibility and thus give unsatisfactory reinforcement effects and, moreover, the product surface properties are poor as well.

An European patent application laid open under No. 0,068,741 discloses a technique of board production which comprises autoclave-curing a composition contain ing a large amount, namely 5-15%, of pulp, 30-40% of silica and 0.05-1% of a reinforcing fiber with the balance being cement. However, such technique using pulp as a main component has problems relative to cement retention in board making, product durability, and so forth.

A U.K. patent application laid open under No. 2,101,645 discloses a technique which uses a large amount, namely 5-15%, of pulp, 5-40% of ultrafine silica rich in reactivity with calcium hydroxide, and a reinforcing fiber such as rock wool, glass fiber, or polypropylene fiber. For the reaction of ordinary silica and calcium hydroxide, autoclave curing under high pressure is said to be essential. The above-cited European patent application No. 0,068,741 filed by the same applicant as that of said laid-open U.K. application serves as an example. That species of silica which is used in accordance with said laid-open U.K. patent application can react under ordinary pressure but is of a very special grade, being ultrafine in particle size and having markedly increased surface area. Said technique has problems with respect to cement retention and other factors in the step of making sheets or the like and furthermore with respect to product durability since pulp used in large amounts is one of the main components.

Any of the techniques known in the art as mentioned above cannot provide substitutes for asbestos-containing products having a number of excellent characteristic properties. Known substitutes are far from asbestos-containing products with respect to high productivity attainable with asbestos and excellent physical properties of the products.

The present inventors, who considered that combination of various components in a manner such that synergistic effects can be produced in addition to the characteristic properties of the respective components is essential for providing an adequate substitute for asbestos which can provide such excellent characteristic properties as mentioned above, made intensive investigations along this line of thought and, as a result, have now completed the present invention.

## SUMMARY OF THE INVENTION

Thus the invention provides an asbestos-free, hydraulic inorganic material-based product formed in the manner of papermaking and comprising 1-10% by weight based on the sheet-forming slurry solids (hereinafter, unless otherwise specified, percentages are by weight and based on the sheet-forming slurry solids) of an inorganic sheet-forming component having an average particle size of $1 \times 10^{-4}$ to $1 \times 10^{-2}$ mm, 1-5% of a pulp having a Canadian freeness of 30-500 ml, 0.5-5% of a reinforcing fiber, 0.5-10% of a fibrous inorganic material having an average diameter of $3 \times 10^{-3}$ to $1.5 \times 10^{-2}$ mm and an average length of 1 x

$10^{-1}$ to 10 mm, and 5-500 ppm (parts per million) of a flocculant, the balance consisting mainly of a hydraulic inorganic material and, for the production thereof, a process for producing an asbestos-free, hydraulic inorganic material-based product formed in the manner of papermaking which comprises preparing an aqueous dispersion by adding 1-10% of an inorganic sheet-forming component having an average particle size of $1 \times 10^{-4}$ to $1 \times 10^{-2}$ mm to an aqueous dispersion containing 1-5% of a pulp having a Canadian freeness of 30-500 ml with and/or followed by stirring or by adding said pulp in said amount to an aqueous dispersion containing said inorganic sheet-forming component in said amount with and/or followed by stirring; adding thereto 0.5-5% of a reinforcing fiber, and 0.5-10% of a fibrous inorganic material having an average diameter of $3 \times 10^{-3}$ to $1.5 \times 10^{-2}$ mm and an average length of $1 \times 10^{-1}$ to 10 mm with and/or followed by stirring; further adding a hydraulic inorganic material with and/or followed by stirring; and forming a sheet from the resulting slurry while adding 5-500 ppm of a flocculant.

## DETAILED DESCRIPTION OF THE INVENTION

A first problem encountered in producing asbestos-free products in the manner of papermaking is poor dispersibility of fibrous materials such as reinforcing fibers.

The dispersibility of such materials can be markedly improved only by the use, in accordance with the invention, of the specific powder-form inorganic material herein referred to as "inorganic sheet-forming component".

Thus, the slurry for sheet formation is prepared by adding 1-10% of an inorganic sheet-forming component having an average particle size (in the case of a fibrous material, this refers to both of the average diameter and average fiber length) of $1 \times 10^{-4}$ to $1 \times 10^{-2}$ mm to an aqueous dispersion containing a pulp, which is one of the constituent elements of the invention and has a Canadian freeness (hereinafter referred to as "CF" for short) of 30-500 ml, in a concentration corresponding to 1-5% of the whole slurry solids or adding said pulp in such amount to an aqueous dispersion containing said inorganic sheet-forming component in said amount, in each case followed by stirring for effecting dispersion in a pulper or the like. To the aqueous dispersion thus prepared, there are added a reinforcing fiber and a fibrous inorganic material, which are constituent elements of the invention. After stirring for effecting dispersion, there is further added a specified amount of a hydraulic inorganic material, whereby a slurry for sheet formation is produced.

Satisfactory dispersibility can be obtained only by addition of reinforcing fibers and other fibers to such aqueous dispersion containing such inorganic sheet-forming component and pulp. Single use of either the inorganic sheet-forming component or pulp or addition of such inorganic sheet-forming component and pulp to an aqueous dispersion of reinforcing and other fibers cannot give satisfactory results.

A second problem encountered in the wet-process production of sheets in the manner of papermaking at an asbestos-free system is concerned, as already mentioned hereinabove, with the retention of hydraulic inorganic materials, such as cement, and other particulate materials.

Further problems are occurrence of cracking on the occasion of unrolling into sheets after cutting, layer separation, poor shapeability in the step of corrugation or some other shaping, and poor surface smoothness.

The retention of the sheet-forming slurry solids is required to be not less than 85%, preferably not less than 90%.

The inventors found that these various problems can be solved to a satisfactory extent only by the combined use of 1-10% of an inorganic sheet-forming component having an average particle size of $1 \times 10^{-4}$ to $1 \times 10^{-2}$ mm, 1-5% of a pulp having a CF of 30-500 ml, 0.5-10% of a specific fibrous inorganic material, 0.5-5% of a reinforcing fiber, and 5-500 ppm of a flocculant.

The inorganic sheet-forming component as so referred to herein may be any finely divided powdery or fibrillose inorganic material which is hardly soluble in water and has an average particle size of $1 \times 10^{-4}$ to $1 \times 10^{-2}$ mm.

Typical powdery inorganic sheet-forming components are natural or synthetic carbonates, for example calcium carbonate species such as natural lime stone, heavy calcium carbonate and synthetic light calcium carbonate, basic magnesium carbonate and dolomite.

Silicon dioxide-containing inorganic materials are also suitable examples. Typical examples are clay minerals, such as kaolin clay, pyrophyllite clay, bentonite, montmorillonite, nontronite, saponite, sericite and talc. Further examples are diatomaceous earth and silica powder. Synthetic hydrous silicic acid and silicic anhydride as well as such industrial wastes as silica dust, silica fume (fumed silica), coal ash and fly ash are also included.

4

Other usable examples are finely divided alumina and serpentinite.

The most preferable among them is silica fume.

Examples of the fibrillose inorganic sheet-forming component are attapulgite, sepiolite and wollastonite.

The above are mentioned only by way of example and by no means limitative of the usable range of said component. It is important that such inorganic sheet-forming component, when it is powdery, has an average particle diameter of $1 \times 10^{-4}$ to $1 \times 10^{-2}$ mm and, when it is fibrillose, has an average diameter and an average fiber length each within the range of $1 \times 10^{-4}$ to $1 \times 10^{-2}$ mm. When said size exceeds $1 \times 10^{-2}$ mm, said component cannot contribute to produce an improvement in the dispersibility of fibrous materials, loses the effect of cement retention and the like, and allows appearance of small cracks and thereby causes poor shapeability. When said size is less than $1 \times 10^{-4}$ mm, said component produces somewhat reduced effects and is unfavorable also from the economical viewpoint. If it has an average particle size greater than $1 \times 10^{-2}$ mm, the component, whether natural or synthetic, may be used after pulverizing or beating to make the size fall within the specified range. Said component should be used in an amount of 1-10% by weight based on the sheet-forming slurry solids. An amount less than 1% by weight is ineffective, whereas an amount greater than 10% by weight is undesirable since the dehydration then becomes difficult and the product density is thereby reduced although the efficiency of cement retention and the like is good.

In accordance with the invention, the pulp should be used in an amount of 1-5% by weight based on the sheet-forming slurry solids. At an addition level less than 1% by weight, the retention of particulate materials is decreased and, at an addition level above 5% by weight, the product incombustibility is impaired, layer separation is promoted and further the water absorption increases to thereby reduce the dimensional stability and also the durability.

The pulp may be either a natural or a synthetic pulp. Examples of the natural pulp which are mainly used are unbleached and bleached pulps from needle-leaved trees and from broad-leaved trees. Other usable examples are pulps obtainable from straw, bamboo, cotton, hemp, ramie, paper mulberry, paper bush, and so forth. Waste pulps recovered from news, bags, corrugated cardsboard boxes, etc. can also be used.

Said pulp preferably has a Canadian freeness (CF) of 30-500 ml, more preferably 50-300 ml. A CF value less than 30 ml is undesirable since the escape of pulp itself through wire meshes becomes easy and the cement retention decreases; such situation is unfavorable from the economical standpoint as well. At a CF which exceeds 500 ml, the escape of cement particles is easy, so that the cement retention is reduced.

Usable examples of the synthetic pulp are polyolefin pulps, such as SWP (polyethylene pulp produced by Mitsui-Zellerback), aramid pulps, such as Kevlar pulp (produced by du Pont), and other fibrillose substances similar in shape and form to these.

The fibrous inorganic material to be used in accordance with the invention may be any such material, either natural or synthetic, other than asbestos, provided that it has a diameter of $3 \times 10^{-3}$ to $1.5 \times 10^{-2}$ mm and a length of $1 \times 10^{-1}$ to 10 mm.

Examples of the synthetic fibrous inorganic material are glass fibers, such as A glass fiber and E glass fiber, which are in general use, and alkali-resistant glass fibers containing zirconium oxide. There may also be used Kanto-loam fiber, slag wool, rock wool, ceramic fibers, and so forth. Said fibers may be used in combination of two or more.

Such fibrous inorganic material is particularly efficient in improving the retention of particulate substances such as cement in the step of sheet formation through synergism with other materials. Therefore, the length of fibrous inorganic material as mentioned above means the length at the time of sheet formation, namely the length in products, but not the length thereof as a starting material. Even when it has a length of more than 10 mm in the state of a starting material, the material can be used on condition that it is broken in a mixer, pulper and/or chest, for instance, so that not less than 60% thereof can acquire a length of $1 \times 10^{-1}$ to 10 mm, preferably 1-5 mm. When said length is less than $1 \times 10^{-1}$ mm, the cement retention becomes much reduced. When the length exceeds 10 mm, the cement retention is reduced and moreover the fiber dispersibility decreases; further problems are layer separation and worsened shapeability. The reduction in cement retention as occurring when the fiber length is less than $1 \times 10^{-1}$ mm may supposedly be due to reduction to null of the effect of connecting aggregate cement flocs. The decrease in cement retention when the fiber length is excessively great seemingly results from reduction in number of fibers and insufficient dispersion of fibers. The average fiber diameter as calculated on the supposition that fibers are circular in section should be $3 \times 10^{-3}$ to $1.5 \times 10^{-2}$ mm. When said diameter is less than $3 \times 10^{-3}$ mm, the drainage is worsened in an abnormal manner and also it is said that a health hazard problem may arise. When the diameter exceeds $1.5 \times 10^{-2}$ mm, the desired effect cannot be produced. Said material is used in an amount of 0.5-10% by weight, preferably 1-3% by weight, based on the sheet-forming slurry solids. At an addition level lower than 0.5%, the effect is poor whereas, at an addition level exceeding 10% by weight, the green sheet becomes excessively hard, the ability thereof to change the form on the making roll becomes poor, cracking or layer separation readily occurs upon development into a sheet form and, furthermore, the shapeability becomes poor.

Although the diameter range for such fibrous inorganic material partly overlaps with that for the inorganic sheet-forming component, said fibrous inorganic material is quite distinct from the latter in length. Thus, said material is 10 times or more longer than the latter. This length is an important factor in increasing the cement retention; the inorganic sheet-forming component can never be a substitute therefor.

The flocculant may be any of flocculants in common use. Thus it includes organic and inorganic ones, which may be anionic, nonionic or cationic. However, those anionic macromolecular flocculants which are generally used as cement flocculants are preferred among others.

The flocculant is used preferably in an amount of 5-500 ppm based on the sheet-forming solids. At an addition level of less than 5 ppm, the effect is insufficient and, at more than 500 ppm, the flocculating power becomes so great as to cause flocs to form great blocks or the drainage becomes so great as to make it difficult to secure a sufficient head, for instance, whereby making uniform sheets becomes difficult; furthermore, felt contamination and reduced productivity may result.

As mentioned above, it has become possible for the first time to solve the problems encountered in producing hydraulic material-based sheet products in asbestos-free systems by the wet formation method, namely the problems concerned with fiber dispersibility, insufficient retention of hydraulic material particles, cracking and layer separation upon development into a sheet form from the making roll, poor shapeability and surface properties, among others, by combinedly using the specified inorganic sheet-forming component, pulp, reinforcing fiber, fibrous inorganic material and flocculant in the respective specified proportions.

Although the reasons why the above combination is so effective are not clear, the effects producible thereby are surprisingly great as compared with the effects expectable from the summation of the effects of the respective components in their single use. Since the lack of only one of the basic constituent elements of the invention already results in markedly reduced effects, it seems that there are synergistic effects among the components.

As already mentioned hereinabove, asbestos serves not only to improve the sheet making efficiency but also to reinforce the products. In cases where asbestos is not used, the combined use of a reinforcing fiber is generally required. In accordance with the invention, too, the use of a known reinforcing fiber is required.

A reinforcing fiber improves the tensile strength, bending strength and impact strength, in which hardened, hydraulic material-based, inorganic sheet products are weak. In particular, to improve the tensile strength and bending strength is important. A fiber to be used for that purpose should desirably meet the following requirements: to have high tensile strength and high Young's modulus, to be good in adhesion to hydraulic inorganic materials such as cement, to be resistant to alkalis, to be nonhazardous to health, and to be inexpensive.

One of the most favorable reinforcing fibers which can meet the above requirements is a polyvinyl alcohol (hereinafter, "PVA" for short) fiber. A polyacrylnitrile fiber is also preferred. Further usable fibers are a polyamide fiber, an aramid fiber, a carbon fiber, and so forth. These reinforcing fibers are required to have a tensile strength of not less than 5 g per denier and a Young's modulus of not less than 90 g per denier.

If improved in adhesion to hydraulic inorganic materials by surface modification by physical means, even those fibers which are hydrophobic by nature and poor in adhesion, such as polyolefin fibers, may also be used provided that they can meet the above requirements with respect to strength and Young's modulus. The reinforcing fiber is used in an amount of 0.5-5%, preferably 1-3%, by weight based on the sheet-forming slurry solids. At an addition level of less than 0.5% by weight, the reinforcing effect cannot be produced. At a level exceeding 5% by weight, poor dispersion and accordingly poor sheet uniformity result and moreover the cost of sheet production increases.

The fineness of the reinforcing fiber is preferably within the range of 0.1-20 denier. The aspect ratio - (ratio of fiber diameter to fiber length) is preferably within the range of 200-1,500 from the dispersibility/reinforcing effect balance viewpoint.

The use of mica in addition to the basic constituent elements of the invention can markedly improve the dimensional stability of the inorganic products formed in the manner of papermaking. Mica can also produce a very great crack-preventing effect upon heating, for example in case of fire. The mica to be used should have a plate-like shape such that the aspect ratio (ratio of diameter D to thickness T, i.e. D/T) is not less than 20 and the average particle size of $3 \times 10^{-2}$ to 5 mm. If those morphological requirements are met, such factors as chemical composition, crystal form, production site and pulverization method are not critical. Thus, the mica species to be used can be selected from among muscovite, phlogopite, biotite,

6

lepidolite, paragonite and synthetic micas. In particular, Suzorite mica of the Canadian origin is very favorable in view of its morphology. When the ratio D/T is less than 20, the shape is more or less near to a spherical one and the flatness of mica is lost, so that the effects of improving the dimensional stability and preventing cracking upon heating decreases. When the average particle size is less than $3 \times 10^{-2}$ mm, no substantial effects can be produced whereas, when said size exceeds 5 mm, problems are encountered in the production steps, for example precipitation in the sheet-forming vat although the desired effects are produced. Such mica is used in an amount of 5-20%. At an addition level of less than 5%, the effects are poor. Addition at a level exceeding 20% is unfavorable from the production viewpoint. For such mica, the size and flat shape as mentioned above and its difference in size and shape from the inorganic sheet-forming component or fibrous inorganic material are essential in its producing the desired effects. The latter cannot be a substitute for said mica.

Hydraulic material-based sheet products formed in the manner of papermaking are used not only as roofing materials but also as interior and exterior finish materials. In such area, the products are required to be lightweight from the easy handling and heat insulation viewpoints. For this purpose, a lightweight inorganic material may be added in an amount of 5-45% so that a desired bulk density can be obtained.

Such lightweight material should be not only lightweight in itself but also of an inorganic nature because of the incombustibility requirement. Said material is further required to be particulate from the viewpoints of sheet-forming ability and surface smoothness. As such inorganic lightweight material, there may be used, either singly or in combination of two or more, the foamed form of inorganic material, such as pearlite, shale, vermiculite, trachyte, obsidian, calcined diatomaceous earth, Kanto loam, silica, glass, etc. The lightweight inorganic material (foamed inorganic material) preferably has an apparent bulk density of not more than 0.3 g/cm³. Materials having a higher density cannot contribute to render the sheet materials lightweight. The grain size of said material is preferably not greater than 1.2 mm, more preferably not more than 0.6 mm, as measured by the method specified in JIS (Japanese Industrial Standard) A 5007. When the average grain size exceeds 1.2 mm, the lightweight material floats on the slurry to thereby inhibit sheet formation and/or impair the sheet smoothness unfavorably. For attaining an apparent sheet density within the preferred range of 0.5-1.3 g/cm³, the level of addition of the lightweight material should be determined within the range where sheet formation is not adversely affected. Thus, the lightweight material is used in an amount of 5-45%. At an addition level of less than 5%, the product sheets are not so lightweight as desired whereas addition at a level exceeding 45% is not preferred because it adversely affects the sheet formation.

As the hydraulic inorganic material to be used in the practice of the invention, there can be used any inorganic material which is essentially hydraulic. Typical examples are portland cement species such as ordinary portland cement, moderate heat portland cement, high early strength portland cement, ultra high-early-strength portland cement and white portland cement. Other examples are mixed cement species such as portland blast furnace cement, silica cement and fly ash cement. Special cement species such as alumina cement, ultra fast-setting cement, colloidal cement and oil-well cement are also usable. It is further possible to use mixtures of hemihydrate gypsum and hydrate gypsum on one hand and slag on the other, or magnesia, for instance.

Furthermore, one or more additives which are in general use may be added. For instance, there may be used a expanding agent such as calcium aluminate or a thickener such as methylcellulose. An insoluble hydroxide such as aluminum hydroxide may further be used for reducing the heat generation when the sheet is heated to combustion.

As mentioned hereinabove, the invention provides a technique of producing, in high efficiency, asbestos-free, high-performance, inorganic products formed in the manner of papermaking by using, in combination with a hydraulic material, the specified materials, namely inorganic sheet-forming component, pulp, reinforcing fiber, fibrous inorganic material and flocculant, combinedly in the respective specified proportions and in a specified manner to thereby produce synergistic effects among the materials in addition to the effects of the respective materials. The invention also provides a technique which can add dimensional stability as well as resistance to cracking upon heating by adding the specified mica species, and further a technique capable of providing ease in handling and thermal insulation by adding the lightweight material. The sheet products according to the invention are superior in performance characteristics to the conventional asbestos-containing inorganic sheet products.

The following examples further illustrate the invention.

7

Example 1

Silica fumes having an average diameter of $2 \times 10^{-3}$ mm and an NUKP (needle-leaved tree-derived unbleached kraft pulp) having a Canadian freeness of 100 ml were added to a pulper equipped with a slasher and containing white water, to make a concentration of about 2%, followed by stirring for 10 minutes.

Thereafter, slag wool having an average diameter of $4 \times 10^{-3}$ mm as a fibrous inorganic material and a PVA fiber as a reinforcing fiber were simultaneously added, followed by stirring for 2 minutes.

The slag wool was subjected to shearing in a pulper in advance, and particles 0.5-2 mm in length collected by sieving were used.

The PVA fiber used had a fineness of 1.4 denier, a strength of 12.8 g/dr (dr standing for denier), a Young's modulus of 300 g/dr and a fiber length of 4 mm.

To the resulting aqueous dispersion, there was added portland cement as a hydraulic material. After 5 minutes of stirring, the resulting dispersion was transferred to a chest, where it was used as a sheet-forming slurry having a solids content of about 120 g/liter.

Said sheet-forming slurry was introduced into a vat while adding thereto an anionic flocculant (Ichikawa Keori's IK Floc T-210) and a necessary quantity of white water, and a sheet was formed from the slurry on a 60-mesh cylinder mold and wound up onto a making roller. After cutting, the green sheet was shaped under a pressure of 50 Kg/cm². The sheet was heat-cured at 50°C for 24 hours and then allowed to stand for 4 weeks under air-drying conditions.

The quantities of the respective components used and the data obtained are shown in Table 1. The dispersibility data given in said table each indicates the state of dispersion of fibrous materials and the criteria for evaluation are as follows: In forming a sheet on the cylinder mold from the sheet-forming slurry, the unevenness on the cylinder mold is observed; when the unevenness was slight and the state of dispersion is very good, the dispersibility is indicated by ⓪ ; when the unevenness is very significant and thus the state of dispersion is very poor, by X; two ranks intermediate therebetween, by O and Δ. The vat water level was evaluated as follows: When a satisfactorily uniform sheet can be laid, the state is qualitatively evaluated as ⊘ ; when the head is little and only an ununiform sheet can be produced or when the drainage is so bad that the sheet-forming slurry overflows the vat, by X; two intermediate ranks therebetween, by O and Δ. The retention (%) of portland cement and so on was calculated as follows: $(1 - W_2/W_1) \times 100$, where $W_1$ is the slurry concentration in the vat before sheet formation and $W_2$ is the concentration in the waste water discharged through the cylinder mold. The layer separation was qualitatively evaluated by manually causing layer separation of the green sheet after making roll treatment. When, under application of a force in the direction of separation, the interface is indefinite and separation hardly occurs, the state is evaluated as ◎ ; when separation occurs readily, as X; two intermediate ranks as O and Δ.

For evaluating the cracking upon shaping, the green sheet after making roll treatment was subjected to ordinary corrugation and the state of cracking was observed.

The bending strength was measured by the method described in JIS A 1408 "Method of testing boards for building purposes by bending" and given in terms of the mean of the value measured in the lengthwise direction and that measured in the transverse direction. Since a change in the retention of hydraulic material and so on causes a substantial change in the reinforcing fiber content, the bending strength data were corrected with respect to the recovery rate to thereby enable comparison of true reinforcing effects.

The impact strength was measured in the lengthwise direction alone without notching by the Izod test method described in JIS K 7110.

Comparative Examples 1-5

The amounts of the components used and the data obtained are shown in Table 1. In Comparative Examples 1-5, some one of the five basic constituent elements of the invention other than the hydraulic material is missing.

Reference Example 1

For reference, an asbestos sheet was produced on the same making machine as used in Example 1. The composition of the sheet was as follows: 13% of asbestos 6D and 2% of unbeaten NUKP, the balance being portland cement.

The data in Table 1 clearly indicate that the sheet of Example 1 is superior in formability and physical properties to the sheets of Comparative Examples and is at least comparable to the asbestos-containing sheet of Reference Example 1.

On the other hand, lack of only one of the basic constituent elements of the invention results in failure to achieve the sheet formability and physical properties which are comparable to those of asbestos sheets.

Table 1

| | Composition (balance being portland cement) | | | | | Formability | | | | | Physical properties | | Remarks |
|---|---|---|---|---|---|---|---|---|---|---|---|---|---|
| | Silica fumes | Pulp | PVA fiber | Slag wool | Floccu-lant | Dispers-ibility | Reten-tion | Vat water level | Layer sepa-ration | Shape-ability | Bending strength | Impact strength | |
| | % | % | % | % | ppm | | % | | | | $kg/cm^2$ | $kg\ cm/cm^2$ | |
| Example 1 | 7 | 2.5 | 2.2 | 2.5 | 100 | ◎ | 96 | ◎ | ◎ | ◎ | 300 | 2.8 | |
| Comparative Example 1 | 0 | 2.5 | 2.2 | 2.5 | 100 | △ | 82 | ○ | △ | △ | 250 | 2.2 | |
| Comparative Example 2 | 5 | 0 | 2.2 | 2.5 | 100 | △ | 80 | △ | △ | △ | 240 | 2.1 | |
| Comparative Example 3 | 5 | 2.5 | 0 | 2.5 | 100 | ◎ | 96 | ◎ | ◎ | ◎ | 140 | 1.0 | Green sheet low in strength and difficult to handle |
| Comparative Example 4 | 5 | 2.5 | 2.2 | 0 | 100 | ○ | 80 | ○ | ○ | ◐ | 280 | 2.3 | |
| Comparative Example 5 | 5 | 2.5 | 2.2 | 2.5 | 0 | ◎ | 73 | △ | ◎ | ◎ | 255 | 2.2 | |
| Reference Example 1 | 0 | 2 | 0 | 0 | 0 | ○ | 92 | ◎ | ◎ | ◎ | 265 | 2.1 | Asbestos 6D 13% |

Example 2 and Comparative Examples 6-7

Sheets were formed in the same manner as in Example 1 except that pyrophyllite clay having an average particle size of $5 \times 10^{-3}$ mm was in lieu of silica fumes, that the quantity of pyrophyllite clay was varied and was 8% (Example 2), 0.5% (Comparative Example 6) or 25% (Comparative Example 7) and that a high-strength acrylic fiber (tenacity 8.5 g/dr, Young's modulus 150 g/dr, thickness 2 dr, length 5 mm) was used as the reinforcing fiber. The results thus obtained are summarized in Table 2.

The examples other than Example 2 unfavorably showed some or other problems.

Table 2

| | Pyriophyllite clay addition level | Formability | | | | | Physical property |
| | | Disper- sibility | Reten- tion | Vat water level | Layer sepa- ration | Shape- ability | Bending strength |
|---|---|---|---|---|---|---|---|
| | | | | | | | $Kg/cm^2$ |
| Example 2 | 8% | O | 94% | ◎ | O | O | 220 |
| Comparative Example 6 | 0.5 | △ | 81 | △ | △ | △ | 215 |
| Comparative Example 7 | 25 | O | 93 | O | △ | X | 220 |

Examples 3-4 and Comparative Examples 8-9

Sheet formation was effected in the same manner as in Example 1 except that the NUPK had a Canadian freeness of 250 ml and was used in an amount of 1.5% (Example 3), 4% (Example 4), 0.5% (Comparative Example 8) or 10% (Comparative Example 9). The results thus obtained are summarized in Table 3.

Examples 3 and 4 gave satisfactory results, while the comparative examples revealed some or other problems. The sheet of Comparative Example 9 which has a high pulp content is markedly poor in dimensional stability which is one of the characteristic features of hydraulic inorganic material-based sheets, hence is undesirable.

11

Table 3

| | NUKP addition level | Formability | | | | | Physical properties | |
|---|---|---|---|---|---|---|---|---|
| | | Dispersibilit | Retention | Vat water level | Layer separation | Shape-ability | Bending strength | Others |
| | | | | | | | Kg/cm$^2$ | |
| Example 3 | 1.5% | O | 92% | ◎ | ◎ | ◎ | 280 | |
| Example 4 | 4 | ◎ | 96 | ◎ | ◎ | ◎ | 290 | |
| Comparative Example 8 | 0.5 | X | 83 | X | O | △ | 230 | |
| Comparative Example 9 | 10 | O | 96 | O | X | O | 270 | Poor in dimensional stability |

Examples 5-6 and Comparative Examples 10-11

Sheet formation was carried out in the same manner as in Example 1 except that the slag wool - (average diameter 4 x 10$^{-3}$ mm) was used in an amount of 3.5% and that the length of slag wool was varied. The results obtained are shown in Table 4.

There are clear differences in results between Examples 5-6 on one hand and the comparative examples on the other. It can thus be understood that the use of a fibrous inorganic material having a fiber length within a proper range is very important. Comparative Example 11 has many problems as arising from very poor dispersibility of the PVA fiber.

Table 4

| | Slag wool length (mm) | Dispersibility | Retention | Vat water level | Layer separation | Shape-ability | Bending strength (kg/cm$^2$) |
|---|---|---|---|---|---|---|---|
| Example 5 | 5 x 10$^{-1}$ | O | 96 | O | O | O | 305 |
| Example 6 | 1 | O | 97 | O | O | O | 310 |
| Comparative Example 10 | 5 x 10$^{-2}$ | O | 80 | △ | O | O | 270 |
| Comparative Example 11 | 15 | X | 78 | △ | △ | X | 240 |

Examples 7-8 and Comparative Example 12

Sheet formation was carried out in the same manner as in Example 1 except that kaolin was used in lieu of silica fumes and that the degree of pulverization was varied, namely the particle size was $8 \times 10^{-3}$ mm (Example 7), $1 \times 10^{-3}$ mm (Example 8) or $2 \times 10^{-2}$ mm (Comparative Example 12). The results obtained are summarized in Table 5.

When the average particle size is greater than the upper limit specified according to the invention, the dispersibility and portland cement retention decrease and the shapeability, among others, becomes worse.

Table 5

| | Average kaolin particle size | Formability | | | | | Physical property |
| | | Disper-sibil-ity | Reten-tion | Vat water level | Layer sepa-ration | Shape-ability | Bending strength |
|---|---|---|---|---|---|---|---|
| | mm | | % | | | | $Kg/cm^2$ |
| Example 7 | $8 \times 10^{-3}$ | O | 95 | ◎ | ◎ | O | 290 |
| Example 8 | $1 \times 10^{-3}$ | ◎ | 97 | ◎ | ◎ | ◎ | 310 |
| Comparative Example 12 | $2 \times 10^{-2}$ | △ | 83 | △ | △ | △ | 250 |

Example 9 and Comparative Example 13

Sheet formation was effected in the same manner as in Example 1 except that heavy calcium carbonate was used in lieu of silica fumes (Example 9).

Sheet formation was conducted in the same manner as in Example 9 except that the heavy calcium carbonate was added simultaneously with portland cement (Comparative Example 13). The results respectively obtained are shown in Table 6.

When the addition of calcium carbonate is conducted in accordance with the invention, the dispersibility of PVA fiber is good, the sheet appearance and surface smoothness are good and the reinforcing effect is also great. When said addition is conducted according to the comparative example, satisfactory dispersibility cannot be attained, so that the sheet lacks good appearance and surface smoothness and the reinforcing effect is poor.

Table 6

| | Disper-sibility | Reten-tion | Vat water level | Surface smoothness | Bending strength |
|---|---|---|---|---|---|
| | | | | | $Kg/cm^2$ |
| Example 9 | ◎ | 96% | O | ◎ | 290 |
| Comparative Example 13 | △ | 92 | O | △ | 240 |

Example 10

Inorganic material-based sheets were formed in the same manner as in Example 1 except that the silica fumes used had an average particle size of $4 \times 10^{-4}$ mm, that pearlite (Ube Industries' PC Lite; bulk specific gravity 0.18, particle size less than 0.3 mm) as a lightweight material and mica (Kuraray's Suzorite mica 40S; average particle size $4 \times 10^{-1}$ mm, average aspect ratio 60) were added in the step of adding slag wool, followed by stirring for about 5 minutes, which was further followed by addition of PVA fiber. The inorganic material-based product thus obtained contained the respective materials in the quantities given below:

Lightweight material (pearlite) 25%

Mica (Suzorite mica) 15%

Inorganic sheet-forming component (silica fumes) 4%

Pulp 2%

Reinforcing fiber 2%

Fibrous inorganic material (slag wool) 2%

Flocculant 100 ppm

Portland cement Balance

The composition used in this example is very excellent in sheet formability. The retention amounted to 92%, and the sheet product formed had a bulk density of 0.91 g/cm³, a bending strength of 170 kg/cm², and good dimensional stability and incombustibility. When a nail was hammered into this product, no cracks were produced. When cutting was attempted with a saw for household use, the product could be cut easily without chipping off or cracking at the edge of the cut face. This indicates good processability.

Utility of the Invention

The asbestos-free, hydraulic inorganic material-based products formed in the manner of papermaking in accordance with the invention are usable as substitutes for the conventional asbestos-containing products and moreover, being asbestos-free, they are expected to be useful in a broader field of application.

Thus, for example, they are useful as asbestos-free corrugated boards, shingles and other roofings; asbestos-free flat sheets, pearlite boards, pulp cement boards, sidings, curtain walls, fire-resistant compartment walls, exterior wall panels, and other interior and exterior materials for buildings, ships, etc.; and asbestos-free pipes.

Claims

1. An asbestos-free, hydraulic inorganic material-based product formed in the manner of papermaking and comprising 1-10% by weight based on the sheet-forming slurry solids (hereinafter, unless otherwise specified, percentages are by weight and based on the sheet-forming slurry solids) of an inorganic sheet-forming component having an average particle size of $1 \times 10^{-4}$ to $1 \times 10^{-2}$ mm, 1-5% of a pulp having a Canadian freeness of 30-500 ml, 0.5-5% of a reinforcing fiber, 0.5-10% of a fibrous inorganic material having an average diameter of $3 \times 10^{-3}$ to $1.5 \times 10^{-2}$ mm and an average length of $1 \times 10^{-1}$ to 10 mm, and 5-500 ppm of a flocculant, the balance consisting mainly of a hydraulic inorganic material.

2. The hydraulic inorganic material-based product of Claim 1 which contains 5-20% of a mica in a plate-like shape such that the aspect ratio (ratio of diameter D to thickness T, namely D/T) is not less than 20 and the average diameter is $3 \times 10^{-2}$ to 5 mm.

3. The hydraulic inorganic material-based product of Claim 1 which contains 5-45% of a lightweight inorganic material.

4. The hydraulic inorganic material-based product of Claim 1, wherein the reinforcing fiber has a fineness of not more than 20 denier, an aspect ratio (ratio of length L to diameter D, namely L/D) of 200-1,500 and a tensile strength of not less than 5 g/denier.

5. The hydraulic inorganic material-based product of Claim 1, wherein the reinforcing fiber is a polyvinyl alcohol fiber and/or polyacrylonitrile fiber.

6. A process for producing an asbestos-free, hydraulic inorganic material-based product in the manner of papermaking which comprises preparing an aqueous dispersion by adding 1-10% by weight based on the sheet-forming slurry solids (hereinafter, unless otherwise specified, percentages are by weight and based on the sheet-forming slurry solids) of an inorganic sheet-forming component having an average particle size of $1 \times 10^{-4}$ to $1 \times 10^{-2}$ mm to an aqueous dispersion containing 1-5% of a pulp having a Canadian freeness of 30-500 ml with and/or followed by stirring or by adding said pulp in said amount to an aqueous dispersion containing said inorganic sheet-forming component in said amount with and/or followed by stirring; adding thereto 0.5-5% of a reinforcing fiber, and 0.5-10% of a fibrous inorganic material having an average diameter of $3 \times 10^{-3}$ to $1.5 \times 10^{-2}$ mm and an average length of $1 \times 10^{-1}$ to 10 mm with and/or followed by stirring; further adding a hydraulic inorganic material with and/or followed by stirring; and forming a sheet from the resulting slurry while adding 5-500 ppm of a flocculant.

7. The process of Claim 6, wherein a mica in a plate-like shape such that the aspect ratio (D/T) is not less than 20 and the average diameter is $3 \times 10^{-2}$ to 5 mm is added at an arbitrarily selected step during the slurry preparation and the resulting slurry is subjected to sheet formation.

8. The process of Claim 6, wherein a lightweight inorganic material is added at an arbitrarily selected step during the slurry preparation and the resulting slurry is subjected to sheet formation.

9. The process of Claim 6, wherein the reinforcing fiber has a fineness of not more than 20 denier, an aspect ratio (L/D) of 200-1,500 and a tensile strength of not less than 5 g/denier.

10. The process of Claim 6, wherein the reinforcing fiber is a polyvinyl alcohol fiber and/or polyacrylonitrile fiber.

## DOCUMENTS CONSIDERED TO BE RELEVANT

| Category | Citation of document with indication. where appropriate, of relevant passages | Relevant to claim | CLASSIFICATION OF THE APPLICATION (Int. Cl.4) |
|---|---|---|---|
| Y | GB-A-2 137 977  (MATSUSHITA ELECTRIC WORKS)<br>* Claims 1,5,7,10 * | 1,5,6,10 | C 04 B   28/02<br>C 04 B   20/00  //<br>(C 04 B   28/02<br>C 04 B   14:20<br>C 04 B   14:46 |
| Y,D | EP-A-0 015 538  (KUBOTA)<br><br>* Abstract * | 1,5,6,10 | C 04 B   16:06<br>C 04 B   18:14<br>C 04 B   18:24  ) |
| A | GB-A-2 048 330  (ROCKWOOL INT.)<br>* Claims 1-3 * | 1 | |
| A | GB-A-2 075 076  (ETERNIT-WERKE L. HATSCHEK)<br>* Claims 1,4 * | 1,5,10 | |
| A | GB-A-1 498 966  (CAPE BOARDS AND PANELS)<br>* Claims  1,2,5;  page  2, lines 68-74 * | 2,3,8 | **TECHNICAL FIELDS SEARCHED (Int. Cl.4)**<br><br>C 04 B   28/00 |
| A | DE-A-3 110 565  (NITTETSU MINING)<br>* Abstract * | 1 | |
| A | SPRECHSAAL, vol. 107, no. 24, December 1974, pages 1062-1072; K.H. GRÜNTHALER et al.: "Stand der Entwicklungen auf dem Gebiet der faserverstärkten Baustoffe" | | |

-----

The present search report has been drawn up for all claims

| Place of search<br>THE HAGUE | Date of completion of the search<br>18-08-1986 | Examiner<br>DAELEMAN P.C.A. |
|---|---|---|